# EUROPEAN PATENT SPECIFICATION

(11) **EP 2 527 915 B1**
(45) Date of publication and mention of the grant of the patent: **12.07.2017**
(21) Application number: 11193517.7
(22) Date of filing: 14.12.2011
(51) Int. Cl.: G02F 1/1337

(54) **Liquid crystal display panel**
Flüssigkristallanzeigetafel
Panneau d'affichage à cristaux liquides

(30) Priority: 27.05.2011 KR 20110050906; 14.06.2011 KR 20110057279
(43) Date of publication of application: 28.11.2012
(73) Proprietor: LG Display Co., Ltd., Yeongdeungpo-gu Seoul 07336 (KR)
(72) Inventor: Kim, Kyung-Chan, Gyeonggi-do (KR); Chae, Gee-Sung, Incheon (KR); Cha, Soon-Wook, Gyeonggi-do (KR); Ham, Yong-Su, Seoul (KR); Gee, Moon-Bae, Gyeonggi-do (KR); Jo, Beom-Gyun, Chungbuk (KR)
(74) Representative: Ter Meer Steinmeister & Partner

(56) References cited:
- US-A1- 2005 271 833
- US-A1- 2006 061 719
- US-A1- 2010 060 834
- US-A1- 2010 085 523

## Description

### CROSS REFERENCE TO RELATED APPLICATION

This application claims the benefit of the Patent Korean Application No. 10-2011-0050906, filed on May 27, 2011 and Korean Application No. 10-2011-0057279, filed on June 14, 2011.

### BACKGROUND OF THE DISCLOSURE

### Field of the Disclosure

The present invention relates to a liquid crystal display device and a method for fabricating the same, and more particularly to a liquid crystal display device and a method for fabricating the same which has a photoinduced alignment film for resolving a residual image.

### Discussion of the Related Art

In the display devices for displaying a picture, there are different kinds of display devices, such as cathode ray tubes, liquid crystal display devices LCD, plasma display panel devices PDP, electro luminescence display devices and organic luminescence field display devices.

In general, the liquid crystal display device LCD displays a picture by making each of liquid crystal cells in a matrix of liquid crystal cells at a liquid crystal display panel to control light transmissivity according to a video signal.

The liquid crystal display panel has a thin film transistor substrate and a color filter substrate bonded with sealant with liquid crystals disposed therebetween.

The color filter substrate has a black matrix for preventing a light from leaking, a color filter for producing a color, a common electrode for forming a vertical electric field to a pixel electrode, and an upper alignment film coated on above elements for alignment of the liquid crystals therewith.

The thin film transistor substrate has gate lines and data lines formed to cross each other on a lower substrate, a thin film transistor TFT formed at every crossed portion of the gate lines and the data lines, a pixel electrode connected to the thin film transistor, and a lower alignment film coated on above elements for alignment of the liquid crystals therewith.

The upper and lower alignment films have surfaces of the alignment films rubbed for making the alignment films to have fixed orientations, respectively. In the rubbing, a rubbing roll having rubbing cloth wounded thereon is rotated on a film of organic polymer coated on the substrate to rub the organic polymer, for orientation of the organic polymer in one direction. However, the rubbing, a mechanical contact with the substrate, forms dirt and static electricity to damage the thin film transistor device. Moreover, as a size of the panel becomes larger, the rubbing has difficulty in uniform application of the alignment agent on the surface of the panel and affects high definition.

In order to solve the problem, as a liquid crystal alignment method without the rubbing, photoinduced alignment by irradiation of a linearly polarized light of a UV band is paid attention. The photoinduced alignment uses a principle in which the liquid crystals are made to align by causing a structural change of a functional group on a surface of the alignment film, such as polymerization and decomposition, with vertical irradiation of a particular linearly polarized light to the surface of the alignment film for a fixed time period. Different from a related art rubbing, the photoinduced alignment has advantages in that a process time period can be shortened, alignment is possible regardless of a size of the mother glass, and different modes can be applied thereto as a pretilt angle can be controlled, easily. However, the photoinduced alignment causes an AC residual image due to a lower alignment power and a lower surface energy than the rubbing, and a DC residual image in a liquid crystal layer when a DC voltage is applied thereto due to accumulation of charge.

### SUMMARY OF THE DISCLOSURE

Accordingly, the present invention is directed to a liquid crystal display device and a method for fabricating the same.

An object of the present invention is to provide a liquid crystal display device as recited in appended claims 1 and 2, and a method for fabricating the same which has a photoinduced alignment film for resolving a residual image.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 illustrates a perspective view of a liquid crystal display panel in accordance with a first preferred embodiment of the present invention.
FIG. 2 illustrates a section of the liquid crystal display panel in FIG. 1.
FIG. 3 illustrates a graph showing a trade off relation between a DC residual image of a photoinduced alignment film and surface anisotropy.
FIGS. 4A to 4C illustrate chemical formulas for describing π electron delocalization in accordance with the present invention, wherein FIGS. 4A and 4B illustrate chemical formulas in a related art photoinduced alignment film respectively, and FIG. 4C illustrates a chemical formula of the photoinduced alignment film of the present invention.
FIG. 5 illustrates a perspective view of a liquid crystal display panel in accordance with a comparative embodiment.
FIG. 6 illustrates a section of the liquid crystal display panel in FIG. 5.
FIGS. 7 and 8 illustrate graphs for describing an AC residual image of a photoinduced alignment film of the comparative embodiment, respectively.
FIG. 9 illustrates graphs each showing application of a voltage to a liquid crystal layer to give a stress to the liquid crystal layer.
FIG. 10 illustrates a chemical formula of an MDA group chemical compound, a chemical formula of an ODA group chemical compound, and a chemical formula of a DDA group chemical compound.
FIGS. 11A to 11F illustrate sections showing the steps of a method for fabricating a liquid crystal display panel in accordance with a comparative embodiment.
FIG. 12 illustrates chemical formulas of photoinduced alignment films in accordance with a comparative embodiment.

### DESCRIPTION OF SPECIFIC EMBODIMENTS

Reference will now be made in detail to the specific embodiments of the present invention, examples of which are illustrated in the accompanying drawings. Wherever possible, the same reference numbers will be used throughout the drawings to refer to the same or like parts. It will be paid attention to that detailed description of known arts is omitted if it is determined that the description can lead to misunderstanding of the present invention.

Preferred embodiments of the present invention will be described with reference to the attached drawings, in detail.

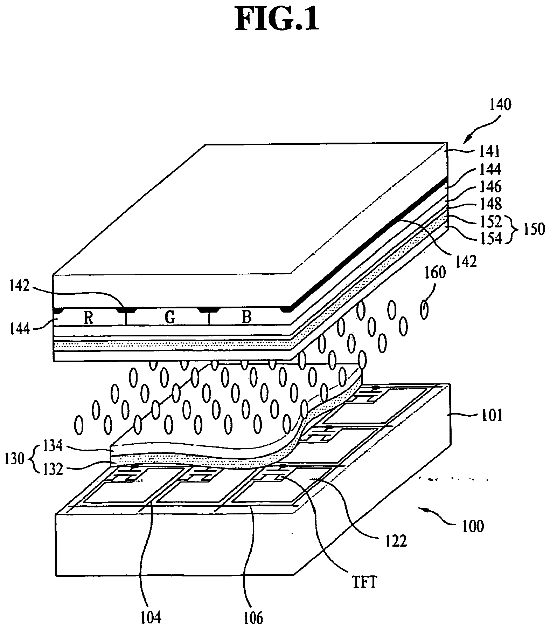

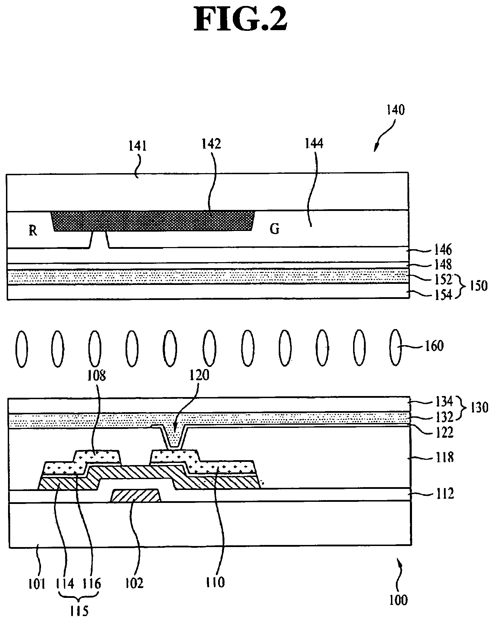

FIG. 1 illustrates a perspective view of a liquid crystal display panel in accordance with a first preferred embodiment of the present invention, and FIG. 2 illustrates a section of the liquid crystal display panel in FIG. 1.

Referring to FIGS. 1 and 2, the liquid crystal display panel includes a color filter substrate 140 and a thin film transistor substrate 100 bonded together with liquid crystals disposed therebetween.

Formed on an upper substrate 141, the color filter substrate 140 includes a black matrix 142, a color filter 144, a planarizing layer 146, a common electrode 148, and an upper alignment film 150.

The color filter 144 includes red, green, and blue color filters R, G, B for producing a color. The red, green, and blue color filters R, G, B absorbs or transmits lights of specific wavelengths by means of red, green, and blue pigments the red, green, and blue color filters R, G, B include thereto, to exhibit the red, green, and blue colors, respectively.

The black matrix 142 is formed to partition pixel regions on each of which the color filter 144 is to be formed, as well as to overlap with the gate lines, data lines, and thin film transistors on the thin film transistor substrate 100. The black matrix 142 shields transmission of a light caused by an unintended liquid crystal orientation to improve contrast, and direct incident of the light on the thin film transistor to prevent the light leakage current from the thin film transistor from taking place.

The common electrode 148 is a transparent conductive layer for supplying a common voltage which is a reference for driving the liquid crystals. As shown in FIGS. 1 and 2, the liquid crystal panel may use, but not limited to, a TN (Twisted-Nematic) system in which an electrode 120is provided to each of the substrates, the liquid crystals are arranged such that a liquid crystal director thereof is twisted at 90°, and a voltage is applied to the electrodes to drive the liquid crystal director, an IPS (In-Plane Switching) mode in which the liquid crystal director is controlled with a horizontal electric field formed by two electrodes on one substrate, or an FFS (Fringe Field Switching) mode in which liquid crystal molecules are made to move by a fringe field formed between two electrodes of a transparent conductive material with a small gap therebetween.

The planarizing layer 146 is formed on the color filter 144 and the black matrix 142 for planarizing a surface of the upper substrate 141.

The thin film transistor substrate 100 includes a thin film transistor TFT, a pixel electrode 122, and a lower alignment film 130 formed at every pixel region defined as the gate lines 106 and the data lines 104 are crossed on the lower substrate 102.

The thin film transistor supplies a video signal from the data line to the pixel electrode 122 in response to a scan signal from the gate line 106. To do this, the thin film transistor TFT has a gate electrode 102 connected to the gate line 106, a source electrode 108 connected to the data line 104, a drain electrode 110 connected to the pixel electrode 122 to opposite the source electrode 108, and a semiconductor pattern 115 overlapped with the gate electrode 102 with a gate insulating film 112 disposed therebetween. In this instance, the semiconductor pattern 115 has an active layer 114 which forms a channel between the source electrode 108 and the drain electrode 110, and an ohmic contact layer 116 formed on the active layer except the channel region for making ohmic contact to the source electrode 108 and the drain electrode 110.

The pixel electrode 122 is formed on a protective layer 118 in contact with the drain electrode 110 of the thin film transistor TFT trough a contact hole 120. The pixel electrode 122 is a transparent conductive layer. Upon supply of the video signal through the thin film transistor TFT, the pixel electrode 122 forms an electric field with the common electrode 148 having the common electrode supplied thereto to vary an orientation of the liquid crystal molecules 160 between two electrodes 122 and 148 varying light transmissivity passing through the liquid crystal molecules 160 for producing gradients.

The protective film 118 protects the gate lines 104 formed between the thin film transistors TFT and the pixel electrode 122 and the thin film transistors TFT. The protective film 118 may be formed as a double layer of an inorganic layer and an organic layer, or single layer of either one.

The upper and lower photoinduced alignment films 130 and 150 fix an orientation of the liquid crystals 160 formed between the thin film transistor substrate 100 and the color filter substrate 140. That is, the upper and lower photoinduced alignment films 130 and 150 are core members of liquid crystal drive which orient the liquid crystals in one direction uniformly making the liquid crystals 160 to serve as a polarized light opener/closer well. A display quality of the liquid crystal display panel is dependent on a liquid crystal alignment characteristic and an electric characteristic of the liquid crystal alignment film. The upper alignment film 150 is formed on the upper substrate 141 having the black matrix 142, the color filter 144, and the common electrode 148 formed thereon, and the lower alignment film 130 is formed on the lower substrate 101 having the thin film transistor TFT and the pixel electrode 122 formed thereon.

The upper and lower photoinduced alignment films 130 and 150 are formed of a photoinduced alignment film material. The photoinduced alignment film material includes a polymer having a photo-reactor. By directing a polarized UV beam to a polymer membrane, a photo-reaction is induced to make the polymer membrane to have anisotropy. Each of the upper and lower photoinduced alignment films 130 and 150 has a first photoinduced alignment film 132 or 152 for resolving the DC residual image, and a second photoinduced alignment film 134 or 154 for improving surface anisotropy of the photoinduced alignment film.

The first photoinduced alignment film 132 or 152 may be formed of a photoinduced alignment film material expressed as a chemical formula 1 below.

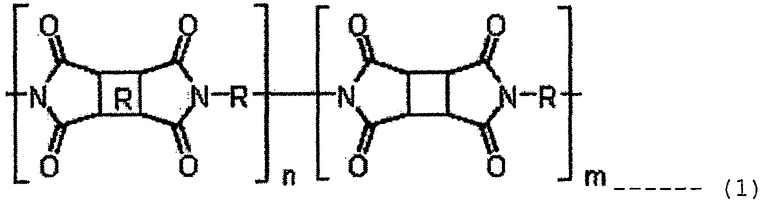

In the chemical formula 1, a ring portion ( 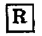 ) marked with R is a hetero atom substituted cyclic compound. A space between the cyclic compounds may be connected with one or a plurality of alkyl chains, and a space between the alkyl chains may have a hetero atom substituted therewith.

An n and m in the chemical formula 1 denote natural numerals larger than 1 respectively, and n may be 0, but m can not be 0.

And, in the chemical formula 1, the ring portion ( 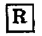 ) marked with R may be any one of the following compounds (A-1 to A-5).

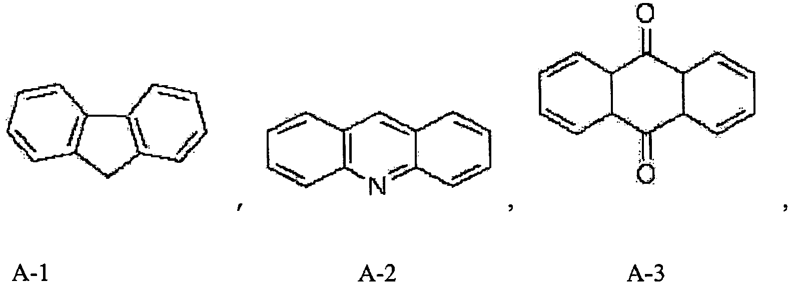

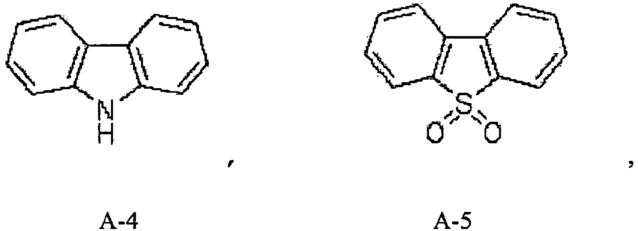

And, in the chemical formula 1, the substituent R may be a giant cyclic compound with at least two or more than two cycles of the following compounds, and the giant cyclic compound may be any cyclic compound with a hetero atom.

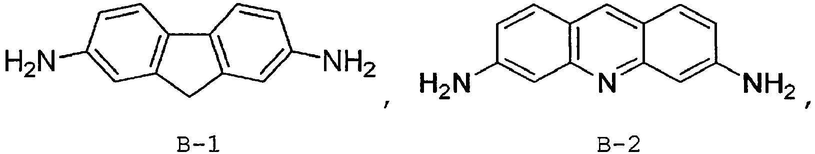

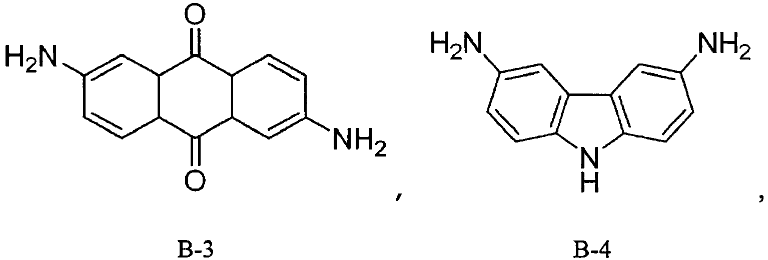

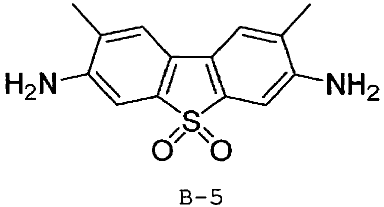

Thus, the first photoinduced alignment film 132 or 152 is expressed with the chemical formula 1, and by introducing the giant cyclic compound to the chemical formula 1, the DC residual image can be resolved.

In detail, though the photoinduced alignment can make uniform alignment regardless of a size of the mother substrate, the residual image which affects the picture quality has been a problem. The residual image is caused by a DC electric filed formed in the panel in relation to the material of the photoinduced alignment film. That is, upon applying a DC voltage to the liquid crystals, impurities in the liquid crystal layer are ionized, and +ions thereof are accumulated on a -polarity alignment film and -ions thereof are accumulated on a +polarity alignment film, and absorbed to the alignment films as the time passes. Even if the DC voltage applied thereto is removed, the ions absorbed to the alignment films are spread to the liquid crystal layer and couple to opposite polarity ions again, to generate a residual DC voltage. In order to reduce the DC residual image, it is required to have a high anchoring energy. That is, a low anchoring energy of the photoinduced alignment film causes the problem of the residual image.

Accordingly, the first photoinduced alignment film 132, or 152 can increase the anchoring energy by introducing the giant cyclic compound having a plurality of π electrons to the chemical formula 1. In more detail, by introducing the giant cyclic compound having a plurality of π electrons to the chemical formula 1, strong π-π electron delocalization is induced between the liquid crystal molecules and the alignment film, to increase the anchoring energy.

In other words, since the photoinduced alignment controls alignment of the liquid crystal molecules only with chemical interaction between the liquid crystal molecules and the alignment film, the anchoring energy is low, which is a cause of the residual image. Since the first photoinduced alignment film 132 or 152 induces the strong π-π interaction between the liquid crystal molecules and the alignment film with the giant cyclic compound, the anchoring energy increases. Thus, by increasing the anchoring energy, the problem of the residual image is solved.

And, the first photoinduced alignment film 132 or 152 is positioned on an underside of the second photoinduced alignment film 134 or 154 for drawing the DC residual image to a lower side. That is, if the adsorbed ions are drawn downward, the DC residual image is resolved. And, the first photoinduced alignment film 132 or 152 can have a directionality of the chain increased by a rigid structure of the giant cyclic compound, to improve the liquid crystal alignment.

Thus, the first photoinduced alignment film 132 or 152 of the present invention can increase the anchoring energy and improve the liquid crystal alignment by introducing the giant cyclic compound which embodies the π electron delocalization.

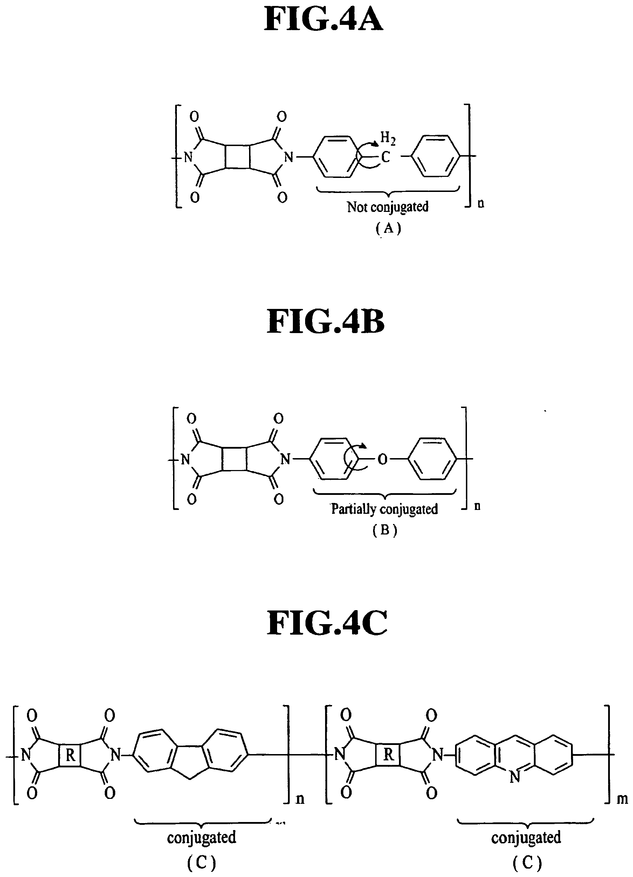

The π electron delocalization will be described with reference to FIGS. 4A to 4C. FIG. 4C illustrates a first photoinduced alignment film having the chemical formula 1 of the present invention applied thereto. However, the chemical formula of the present invention is not limited to the one shown.

FIGS. 4A and 4B illustrate related art chemical formulas. FIG. 4A illustrates a chemical formula having a not conjugated portion A, where the benzenes rings are connected, which is not delocalized, FIG. 4B illustrates a chemical formula having a partially conjugated portion B, where the benzenes rings are connected, which is partially delocalized as an oxygen is introduced between the benzene rings. Since the photoinduced alignment films having the structure which is not delocalized like the chemical formula in FIG. 4A, and the structure which is partially delocalized like the chemical formula FIG. 4B, have low anchoring energy, the DC residual image characteristic can not be improved.

However, referring to FIG. 4C, the present invention has a π electron delocalized conjugated portion C where the benzene rings are connected. Thus, since the first photoinduced alignment film 132 or 152 of the present invention has a connection portion of the benzene rings which is a π electron delocalized portion, the anchoring energy can be increased.

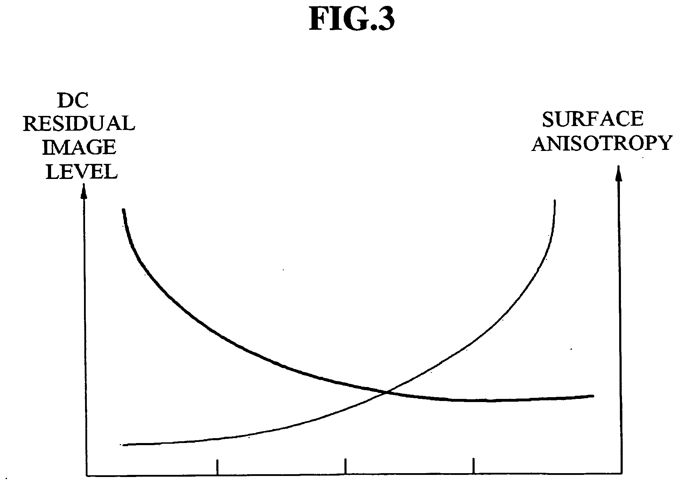

The second photoinduced alignment film 134 or 154 is formed of a material which enables the photoinduced alignment film to maintain a uniform liquid crystal alignment. In general, the photoinduced alignment film has a relation of trade-off as shown in FIG. 3. As shown in FIG. 3, though, as the DC residual image is resolved, the surface anisotropy becomes a problem, and as the surface anisotropy is resolved, the DC residual image becomes a problem, there is an appropriate point where the two graphs meet. According to these characteristics, while the first photoinduced alignment film 132 or 152 of the present invention resolves the DC residual image, the second photoinduced alignment film 134 or 154 is formed of a material which can align the liquid crystals well to maintain the uniform liquid crystal alignment.

In this instance, each of the upper and lower photoinduced alignment films 130 and 150 has two layers of the first and second photoinduced alignment films 132, and 134, or 152, and 154, by coating one layer of the photoinduced alignment film, and making phase separation of the layer with a UV beam, or by coating the material of the first photoinduced alignment film 132 or 152 having the giant cyclic compound on the chemical formula 1, and the material of the second photoinduced alignment film 134 or 154 which can align the liquid crystals well. That is, after coating the material of the first photoinduced alignment film 132 or 152, the material of the second photoinduced alignment film 134 or 154 is coated, to form the two layers of the upper and lower photoinduced alignment films 130 and 150.

According to this, the upper and lower photoinduced alignment films 130 and 150 of the present invention resolve the DC residual image with the first photoinduced alignment film 132 or 152 and maintains the uniform liquid crystal alignment with the second photoinduced alignment film 134 or 154.

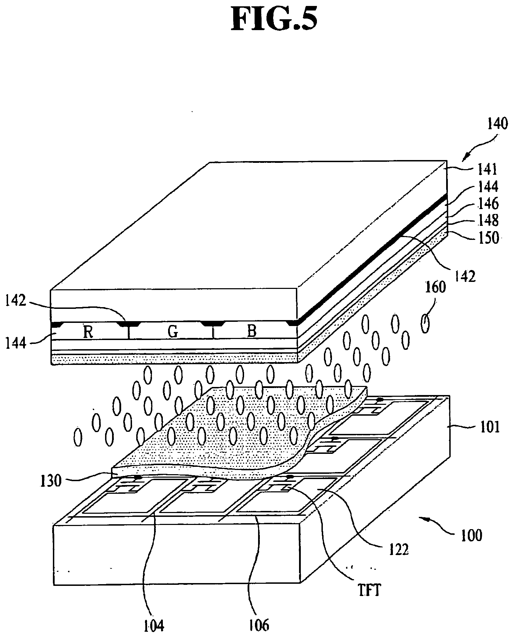

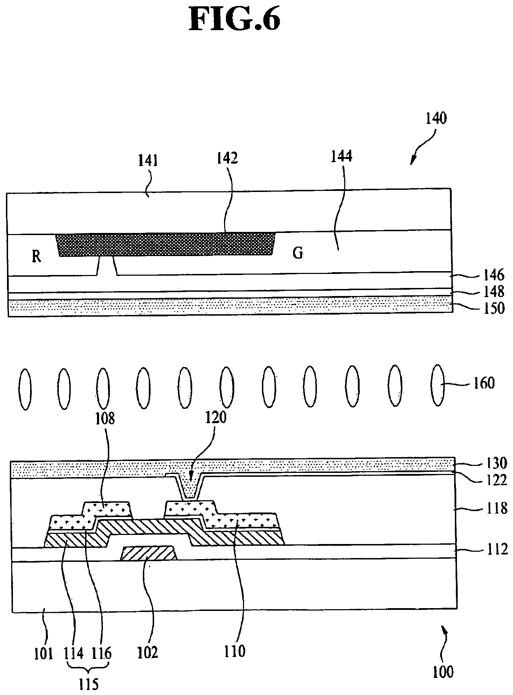

FIG. 5 illustrates a perspective view of a liquid crystal display panel in accordance with a comparative embodiment, and FIG. 6 illustrates a section of the liquid crystal display panel in FIG. 5.

Referring to FIGS. 5 and 6, the liquid crystal display panel has elements identical to the liquid crystal display panel illustrated in FIGS. 1 and 2, except the upper and lower photoinduced alignment films 130 and 150. Therefore, description of identical elements will be omitted.

Each of the upper and lower photoinduced alignment films 130 and 150 has a chemical formula 2 below.

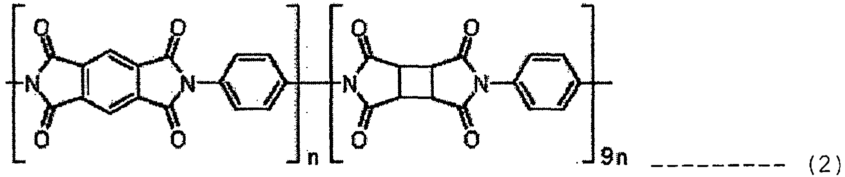

Where, n denotes molecular weight in a range of 2000 ∼ 10,000. In order to form such a structure, the photoinduced alignment film is formed of a polyimide group chemical compound, and the polyimide group chemical compound is a photoinduced alignment film material including PDMA (Pyromellitic Dianhydride) group chemical compound, a CBDA (Cyclobutane-1,2,3,4 -tetracarboxylic Dianhydride) group chemical compound, and a PDA (Phenylene Diamine) group chemical compound. The photoinduced alignment film material has a chemical formula 3 below.

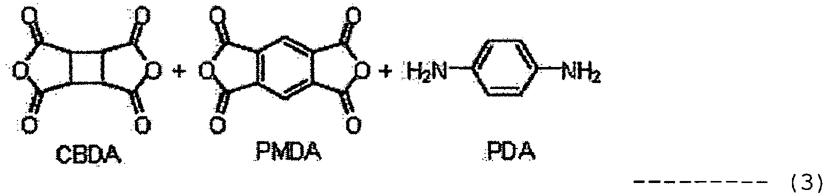

In the photoinduced alignment film material, the PDMA group chemical compound and the CBDA group chemical compound have a ratio of 1:9 by weight, and a chemical compound having the PDMA group chemical compound and the CBDA group chemical compound put together and the PDA chemical compound have a ratio of 1:1 by weight. In other words, 100wt% of the photoinduced alignment film material consists of 5 wt% of the PDMA group chemical compound, 45 wt% of the CBDA group chemical compound, and 50 wt% of the PDA group chemical compound. The photoinduced alignment film material with the ratios can resolve both the AC residual image and the DC residual image.

However, the photoinduced alignment film material of the present invention is formed within a range in which amounts of the PDMA group chemical compound and the CBDA group chemical compound do not influence to each other. As described before, the ratio of the PDMA group chemical compound to the CBDA group chemical compound is 1:9 by weight. The ratio is a ratio in which the amount of the PDMA group chemical compound does not influence to anisotropy of the CBDA group chemical compound, and the amount of the CBDA group chemical compound does not influence to the delocalization of the PDMA group chemical compound. The PDMA group chemical compound increases the electron delocalization of the photoinduced alignment film to lower specific resistivity, and the low specific resistivity resolves the DC residual image.

And, the PDA group chemical compound, having a rigid characteristic, enhances an extent of crystallization of the photoinduced alignment film, and maximizes exposure of the CBDA to a UV beam when the UV beam is directed thereto to improve anisotropy. That is, the CBDA serves to fix a directionality, wherein the PDA group chemical compound maximizes a concentration of the CBDA to improve the AC residual image, and enhances an extent of the crystallization of the photoinduced alignment film to resolve the AC residual image.

As described, by forming the photoinduced alignment film material to have the ratio of the PDMA group chemical compound to the CBDA group chemical compound is 1:9 by weight, and the ratio of the chemical compound in which the PDMA group chemical compound and the CBDA group chemical compound are put together to the PDA group chemical compound is 1:1 by weight, the AC residual image can be resolved, while the DC residual image is resolved. That is, only when the photoinduced alignment film material has such a ratio, the DC residual image and the AC residual image can be resolved, which have a trade off relation.

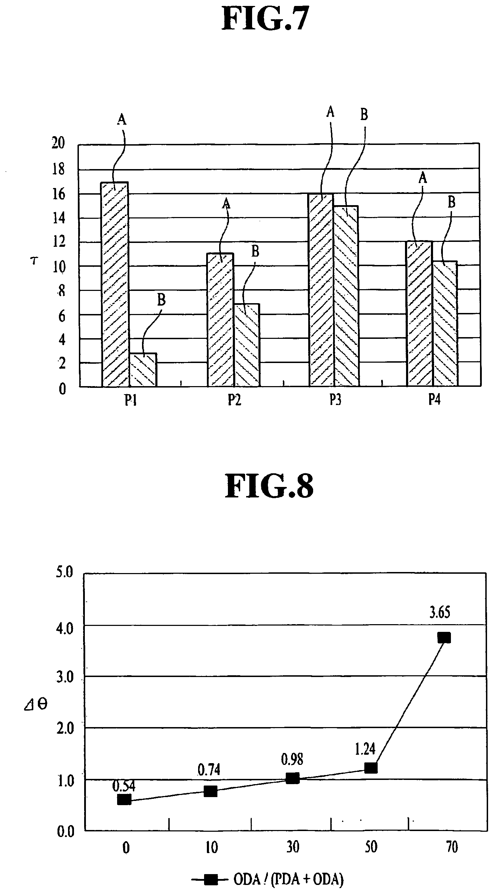

FIGS. 7 and 8 illustrate graphs for describing an AC residual image of a photoinduced alignment film of the present invention, respectively.

FIG. 7 illustrates a graph showing a time constant of the photoinduced alignment film of the comparative embodiment P1 of the PDA group chemical compound, a time constant of a photoinduced alignment film P2 of MDA (4,4'diaminodiphenyl methane) group chemical compound, a time constant of a photoinduced alignment film P3 of an ODA (4,4'-oxydianiline) group chemical compound, and a time constant τ of a photoinduced alignment film P4 of a DDS (4,4'-diamino diphenylsulfide) group chemical compound.

In more detail, though B bar graphs showing P1 to P4 are on the photoinduced alignment film material having the ratio of the PDMA group chemical compound to the CBDA group chemical compound being 1:9 by weight, and A bar graphs showing P1 to P4 are on the photoinduced alignment film material having no PDMA group chemical compound, but the CBDA group chemical compound. As can be known from differences between the A bar graphs and the B bar graphs, an appropriate mix of the PDMA group chemical compound is effective for the DC residual image.

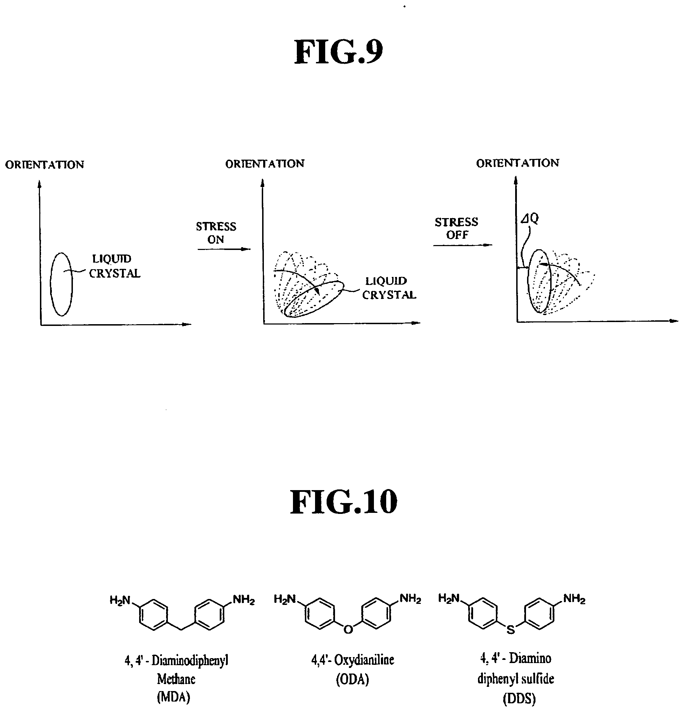

The lower the time constant in the graph shown in FIG. 7, the thinner the DC residual image. As shown in FIG. 9, the time constant in the bar graph is a time required for the liquid crystal layer to return to an original direction after a high voltage is applied to the liquid crystal layer. Accordingly, the smaller the time constant, the shorter for the liquid crystals to return to the original direction. The small time constant implies removal of the DC residual image accumulated thus. It can be known that P1 has a smallest time constant. Table 1 below shows the time constants of the photoinduced alignment film materials.

**Table 1**

| | P1 | P2 | P3 | P4 |
|---|---|---|---|---|
| Time constants τ of A bar graphs | 17 | 11 | 16 | 12.1 |
| Time constants τ of B bar graphs | 2.8 | 7 | 15 | 10.2 |

As shown in FIG. 7 and table 1, the time constant of the B bar graph on P1 is 2.8, the time constant of the B bar graph on P2 is 7, the time constant of the B bar graph on P3 is 15, and the time constant of the B bar graph on P4 is 10.2. Thus, it can be known that the time constant of the comparative embodiment is a smallest, and the DC residual image is removed, accordingly.

In the meantime, the AC residual image varies with properties of the chemical compounds included to the photoinduced alignment film materials.

FIG. 8 illustrates variation of a liquid crystal layer angle with an amount of the ODA group chemical compound included to the photoinduced alignment film. In detail, FIG. 8 illustrates an X-axis denoting an amount of the ODA group chemical compound, and a Y-axis denoting an amount of the variation of the liquid crystal angle.

It implies that the smaller the variation of the liquid crystal angle, the thinner the AC residual image. That is, it implies that, after application of a high voltage to the liquid crystal layer shown in FIG. 9, a difference of angle Δθ between an alignment direction and the liquid crystals. Thus, it can be known that the smaller the angle change Δθ of the liquid crystals, the thinner the AC residual image. However, it can be known that the larger the inclusion of the ODA group chemical compounds to the photoinduced alignment film material, the larger the change of the liquid crystal angle. Though graphs on the ODA group chemical compound are only shown, different from the characteristic of the PDMA group chemical compound, though not only the ODA group chemical compound, but also the photoinduced alignment film material including the MDA group chemical compound, or the DDS group chemical compound has flexible characteristic to increase the AC residual image, the PDMA group chemical compound, having a rigid characteristic, serves to remove the AC residual image.

In detail, different from the PDMA group chemical compound, the MDA group chemical compound, the ODA group chemical compound, and the DDS group chemical compound have flexible structures, making an extent of crystallization of the photoinduced alignment film (Polyimide) poor. The extent of crystallization of the photoinduced alignment film can be very important factor on the AC residual image. In the photoinduced alignment, though it is required that a ring cleavage of the CBDA which causes the alignment has directionality, if the extent of crystallization becomes poor, the directionality is lost failing to resolve the AC residual image. Since the PDMA group chemical compound has a high extent of the crystallization, the PDMA group chemical compound can resolve the AC residual image.

And, referring to FIG. 10, since the ODA, which can have a high probability of causing anisotropy only when the ODA is exposed to the light much owing to high concentration of the CBDA which has anisotropy, has benzene rings connected with an oxygen to have a length longer than the chemical formula of the PMDA, the ODA has a relatively reduced amount of CBDA in one polymer chain. However, the PMDA has no oxygen connecting the benzene rings, resulting to have a length shorter than the chemical formula of the ODA, relatively increasing the amount of the CBDA to have high concentration of the CBDA to increase exposure to the light, the probability of causing the anisotropy becomes high, enabling to resolve the AC residual image. Since not only the ODA structure, but also the MDA group chemical compound has the benzene rings connected with a methane, and the DDS group chemical compound has the benzene rings connected with a sulfide, to have structures longer than the PDMA group chemical compound, above chemical compounds have a problem of the AC residual image.

Thus, the present invention can resolve the AC residual image and the DC residual image at a time.

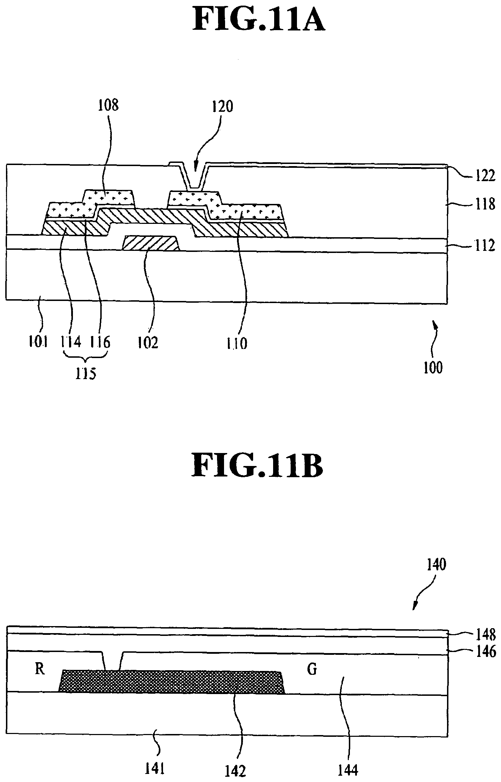

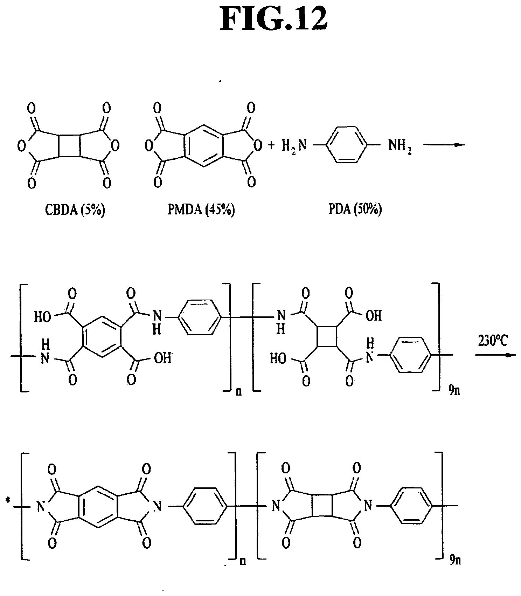

FIGS. 11A to 11F illustrate sections showing the steps of a method for fabricating a liquid crystal display panel in accordance with a comparative embodiment, and FIG. 12 illustrates chemical formulas of photoinduced alignment films in accordance with a comparative embodiment.

Referring to FIG. 11A, a thin film transistor substrate 100 is formed on a lower substrate 101 to include a thin film transistor TFT and a pixel electrode connected to the thin film transistor TFT.

In detail, a thin film transistor substrate 100 is formed on the lower substrate 101 to include the thin film transistor TFT to have a gate electrode 108 connected to a gate line 106, a source electrode 108 connected to a data line 104, a drain electrode 110 positioned opposite to the source electrode 108 connected to the pixel electrode 122, an active layer overlapped with the gate electrode 102 with a gate insulating film 112 disposed therebetween to form a channel between the source electrode 108 and the drain electrode 110, and an ohmic contact layer 116 formed on the active layer except the channel region for making the active layer to cause ohmic contact to the source electrode 108 and the drain electrode 110, and the pixel electrode 122 connected to the drain electrode 110 of the thin film transistor TFT.

Referring to FIG. 11B, a color filter substrate 140 is formed on an upper substrate 141 to includes a black matrix 142, a color filter 144, and a common electrode 148.

In detail, the color filter substrate 140 is formed on an upper substrate 141 to include a black matrix 142 to partition pixel regions on each of which the color filter 144 is to be formed, and to overlap with the gate line 106, the data line 104, and the thin film transistor TFT on the thin film transistor substrate 100, the color filter 144 for producing a color, a planarizing layer 146 formed on the black matrix 142 and the color filter 144, and a common electrode 148 on the planarizing layer 146.

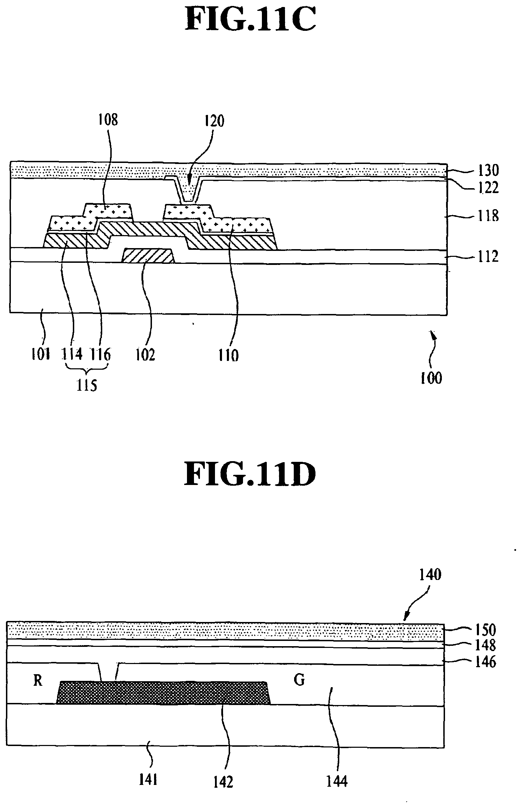

Then, referring to FIGS. 11C and 11D, a photoinduced alignment film is formed to include an upper photoinduced alignment film 150 on an entire surface of the color filter substrate 140, and a lower photoinduced alignment film 130 on an entire surface of the thin film transistor substrate 100.

At first, referring to FIGS. 11C and 11D, a photoinduced alignment film material is coated on an entire surface of the color filter substrate 140 or an entire surface of the thin film transistor substrate 100. A method for forming the photoinduced alignment film material to be coated on the color filter substrate 140 or the thin film transistor substrate 100 will be described, briefly. The photoinduced alignment film material is formed of a polyimide group chemical compound including a PMDA (Pyromellitic dianhydride) group chemical compound, a CBDA (Cyclobutane-1,2,3,4 -tetracarboxylic dianhydride) group chemical compound, and a PDA(Phenylene diamine) group chemical compound. In the photoinduced alignment film material, a ratio of the PMDA group chemical compound to the CBDA group chemical compound is 1:9 by weight, and a ratio of the PMDA group chemical compound to the CBDA group chemical compound is 1:1 by weight. In other words, as shown in FIG. 9, 100wt% of the photoinduced alignment film material consists of 5wt% of the PDMA group chemical compound, 45wt% of the CBDA group chemical compound, and 50wt% of the PDA group chemical compound (See chemical formula 3). The photoinduced alignment film is mixed with NMP (N-methylpyrrolidone) or DMAC (N,N-dimethyl acetamide) to prepare a chemical compound expressed as a chemical formula 4 shown below.

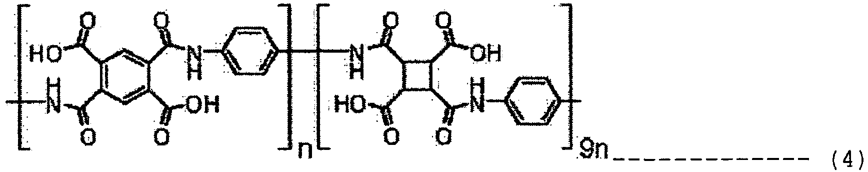

Then, a mixture as shown in the chemical formula 4 is coated on the color filter substrate 140 or the thin film transistor substrate 100, and baked at a fixed temperature (For an example, 230°C), to form the photoinduced alignment film material having the chemical formula 2. A UV beam is directed to the photoinduced alignment film material prepared thus to cause ring cleavages of the CBDA, and re-arrangement of monomers having the ring cleavages of the CBDA caused thus is induced (The Diels-Alder reaction is induced selectively), enabling to maximize anisotropy efficiency.

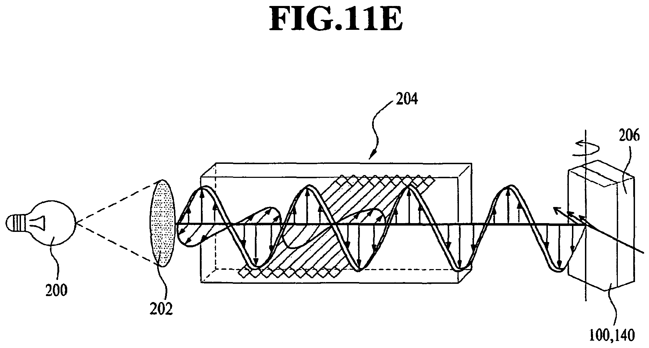

A UV directing device is provided as shown in FIG. 11E for directing the UV beam to the photoinduced alignment film to fix an alignment of the liquid crystals. The UV directing device includes a light source unit 200 for directing the UV beam, a lens unit 202 for forming a straight light, a polarizing unit 204 for forming a polarized light, and a jig unit 206 for mounting the color filter substrate or the thin film transistor substrate having the photoinduced alignment film material formed thereon. The UV beam is directed with the UV directing device provided thus to fix the alignment of the liquid crystals.

By means of the upper and lower photoinduced alignment films 130 and 150 formed thus, the AC residual image and the DC residual image can be resolved at a time.

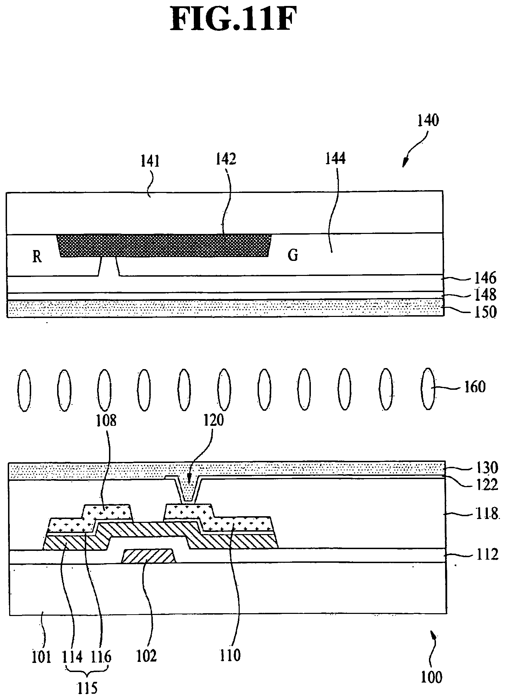

Finally, referring to FIG. 11F, the color filter substrate 140 and the thin film transistor substrate 100 are bonded with sealant to provide the liquid crystal display panel.

As has been describe, the liquid crystal display device and the method for fabricating the same of the present invention have the following advantages.

The liquid crystal display panel in accordance with the first preferred embodiment of the present invention includes upper and lower alignment films having the first photoinduced alignment film and the second photoinduced alignment film. In this instance, the first photoinduced alignment film is formed on a giant cyclic chemical compound to embody π electron delocalization between the liquid crystal molecules and the alignment film to increase anchoring energy, enabling to resolve the residual image. And, the second photoinduced alignment film is formed of a material which can improve surface anisotropy of the photoinduced alignment film to maintain a uniform liquid crystal orientation. Thus, the liquid crystal display panel in accordance with the first preferred embodiment of the present invention resolves the DC residual image with the first photoinduced alignment film and the AC residual image with the second photoinduced alignment film.

The photoinduced alignment film in the liquid crystal display panel in accordance with the comparative embodiment is formed of photoinduced alignment film material including the PDMA group chemical compound, the CBDA group chemical compound and the PDA group chemical compound at 5wt% of the PDMA group chemical compound, 45wt% of the CBDA group chemical compound, and 50wt% of the PDA group chemical compound with reference to 100wt% of the photoinduced alignment film material. The photoinduced alignment film material formed at the ratio can resolve both the AC residual image and the DC residual image at a time.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A liquid crystal display panel comprising:
a color filter substrate having R,G,B color filters for producing a color, a black matrix for partitioning pixel regions having the color filters formed thereon, and a common electrode;
a thin film transistor substrate bonded with the color filter substrate with liquid crystals disposed therebetween, the thin film transistor substrate having the thin film transistors and pixel electrodes connected to the thin film transistors respectively; and
an alignment film having a first photoinduced alignment film including a chemical compound expressed with a chemical formula 1 below coated on entire surfaces of the color filter substrate and the thin film transistor substrate, and a second alignment film formed on the first photoinduced alignment film, 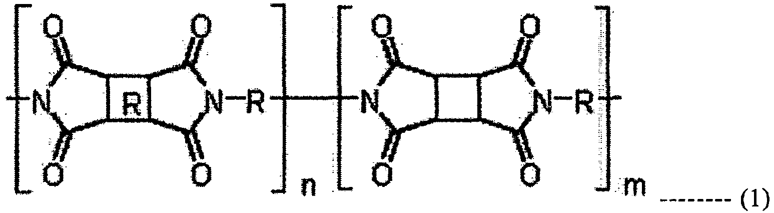 where n denotes 0 or a natural numeral larger than 0, and m denotes 1 or a natural numeral larger than 1,
wherein the ring portion 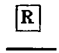 marked with R in the chemical formula 1 is a hetero atom substituted cyclic compound
and wherein the substituent R in the chemical formula 1 is a cyclic chemical compound having at least two of the chemical compounds below,

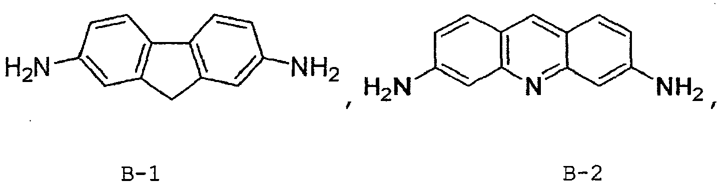

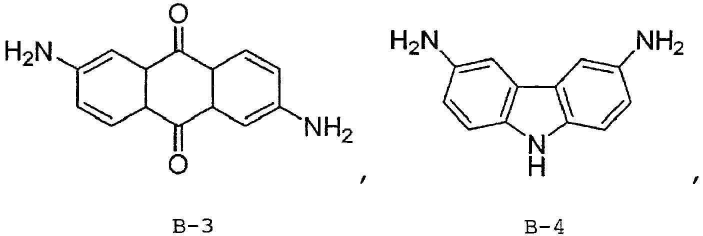

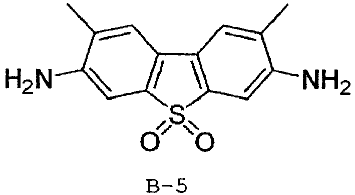

2. The liquid crystal display panel as claimed in claim 1, wherein the hetero atom substituted cyclic compound is a chemical compound selected from the chemical compounds A-2 to A-5 below,

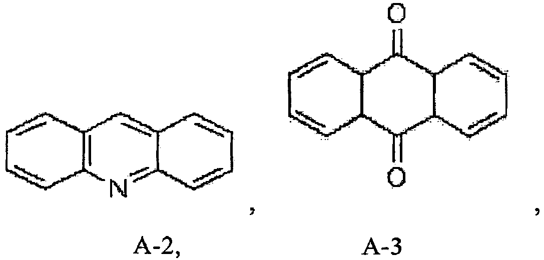

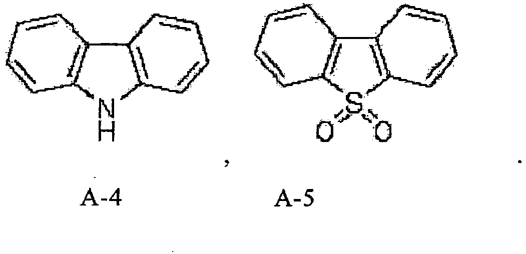

## Patentansprüche

1. Flüssigkristallanzeigetafel, die Folgendes umfasst:
ein Farbfiltersubstrat, das R,G,B-Farbfilter, um eine Farbe zu erzeugen, eine schwarze Matrix zum Unterteilen von Pixelgebieten, die die Farbfilter darauf gebildet aufweisen, und eine gemeinsame Elektrode aufweist;
ein Dünnschichttransistorsubstrat, das mit dem Farbfiltersubstrat mit dazwischen angeordneten Flüssigkristallen gebondet ist, wobei das Dünnschichttransistorsubstrat die Dünnschichttransistoren und die Pixelelektroden, die jeweils mit den Dünnschichttransistoren verbunden sind, aufweist, und
eine Ausrichtungsschicht, die eine erste photoinduzierte Ausrichtungsschicht, die eine chemische Verbindung enthält, die durch die chemische Formel 1 ausgedrückt wird und auf der gesamten Oberfläche des Farbfiltersubstrats und des Dünnschichttransistorsubstrats aufgebracht ist, und eine zweite Ausrichtungsschicht, die auf der ersten photoinduzierten Ausrichtungsschicht gebildet ist, enthält, 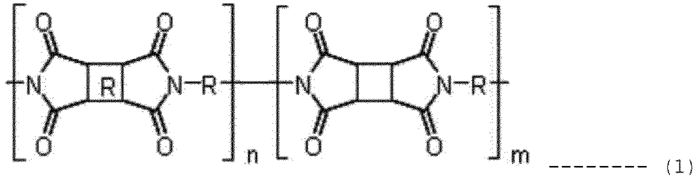
wobei n die Zahl 0 oder eine natürliche Zahl größer als 0 bezeichnet und m die Zahl 1 oder eine natürliche Zahl größer als 1 bezeichnet,
wobei der Ringabschnitt 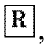 der in der chemischen Formel 1 mit R gekennzeichnet ist, eine Heteroatom-substituierte zyklische Verbindung ist
und wobei der Substituent R in der chemischen Formel 1 eine zyklische chemische Verbindung ist, die mindestens zwei der nachstehenden chemischen Verbindungen aufweist,

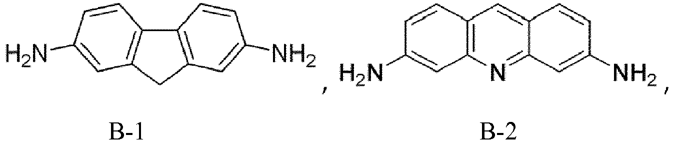

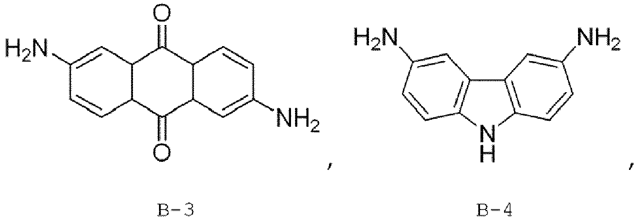

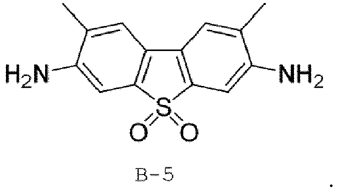

2. Flüssigkristallanzeigetafel nach Anspruch 1, wobei die Heteroatom-substituierte zyklische Verbindung eine chemische Verbindung ist, die aus den nachstehenden chemischen Verbindungen A-2 bis A-5 gewählt ist,

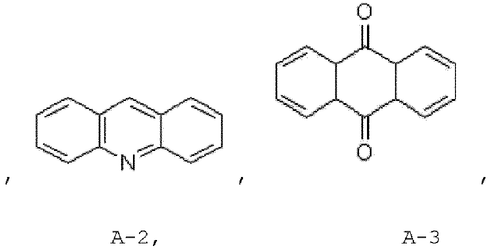

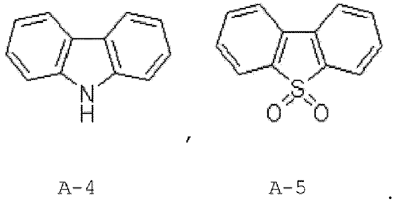

## Revendications

1. Panneau d'affichage à cristaux liquides comprenant :
un substrat de filtre de couleur comportant des filtres de couleur R, V, B pour produire une couleur, une matrice de noir pour partitionner des régions de pixels sur lesquelles sont formés les filtres de couleur, et une électrode commune ;
un substrat de transistor à film mince lié au substrat de filtre de couleur avec des cristaux liquides disposés entre ceux-ci, le substrat de transistor à film mince comportant les transistors à film mince et des électrodes de pixel reliées respectivement aux transistors à film mince ; et
un film d'alignement comportant un premier film d'alignement à photo-induction comprenant un composé chimique exprimé par une formule chimique 1 ci-dessous enduit sur des surfaces complètes du substrat de filtre de couleur et du substrat de transistor à film mince, et un deuxième film d'alignement formé sur le premier film d'alignement à photo-induction, 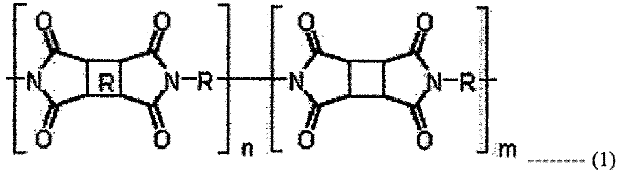
où n représente 0 ou un nombre naturel supérieur à 0, et m représente 1 ou un nombre naturel supérieur à 1,
dans lequel la portion d'anneau 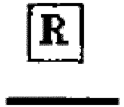 marquée avec R dans la formule chimique 1 est un composé cyclique à substitution d'hétéro atome,
et dans lequel le substituant R dans la formule chimique 1 est un composé chimique cyclique comportant au moins deux des composés chimiques ci-dessous,

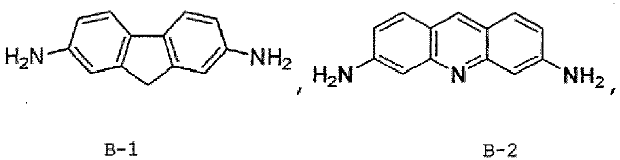

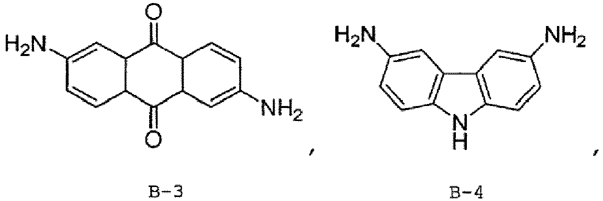

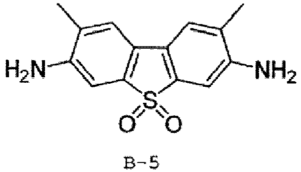

2. Panneau d'affichage à cristaux liquides selon la revendication 1, dans lequel le composé cyclique à substitution d'hétéro atome est un composé chimique sélectionné parmi les composés chimiques A-2 à A-5 ci-dessous,
